(19) 

Europäisches
Patentamt
European
Patent Office
Office européen
des brevets

(11) **EP 4 235 916 A1**

(12) **EUROPEAN PATENT APPLICATION**
published in accordance with Art. 153(4) EPC

(43) Date of publication:
**30.08.2023 Bulletin 2023/35**

(21) Application number: **21892402.5**

(22) Date of filing: **16.11.2021**

(51) International Patent Classification (IPC):
*H01M 50/116* (2021.01)    *H01M 10/04* (2006.01)
*B29C 65/00* (2006.01)     *B29C 65/78* (2006.01)
*B29C 55/02* (2006.01)     *B29L 31/00* (2006.01)

(52) Cooperative Patent Classification (CPC):
**B29C 55/02; B29C 65/00; B29C 65/78;
H01M 10/04; H01M 50/116;** B29L 2031/00;
Y02E 60/10; Y02P 70/50

(86) International application number:
**PCT/KR2021/016710**

(87) International publication number:
**WO 2022/103235 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020 KR 20200152606
30.04.2021 KR 20210056249**

(71) Applicant: **Samsung Electronics Co., Ltd.
Suwon-si, Gyeonggi-do 16677 (KR)**

(72) Inventors:
• **KIM, Sunjin
 Suwon-si Gyeonggi-do 16677 (KR)**
• **PYUN, Jooyil
 Suwon-si Gyeonggi-do 16677 (KR)**
• **JANG, Kiyoun
 Suwon-si Gyeonggi-do 16677 (KR)**
• **JEON, Yongsub
 Suwon-si Gyeonggi-do 16677 (KR)**
• **CHO, Chihyun
 Suwon-si Gyeonggi-do 16677 (KR)**
• **CHOI, Jaeman
 Suwon-si Gyeonggi-do 16677 (KR)**
• **HEO, Changryong
 Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE COMPRISING BATTERY**

(57)    According to various embodiments of the present disclosure, an electronic device may comprise: a housing including a plate; a base member arranged in the housing and arranged substantially parallel to the plate; and a battery arranged in a region of the base member and configured to supply power to the electronic device, the battery comprising: an electrode assembly including a first portion and a second portion having different sizes from each other, and a battery case including an accommodation space for accommodating the electrode assembly and a sealing portion arranged along the outer periphery of the electrode assembly, wherein an intersection portion between the first portion and the second portion of the electrode assembly forms a first curved structure, and at least a portion of the sealing portion adjacent to the first curved structure includes a first elongate structure formed on the basis of the first curved structure.

FIG. 4A

## Description

[Technical Field]

Various embodiments of the disclosure relate to an electronic device including a battery.

[Background Art]

Lithium secondary batteries may be largely classified into cylindrical batteries, prismatic batteries, and pouch batteries depending on their appearance (e.g., battery case) and into lithium ion batteries, lithium ion polymer batteries, and lithium polymer batteries depending on the type of electrolyte.

Due to the recent trend towards compact electronic devices, demand for prismatic batteries and pouch-type batteries having a thin thickness is increasing. In particular, there is a high interest in pouch-type batteries that are easily deformable, inexpensive to manufacture, and light in weight.

Pouch-type batteries may include secondary batteries in which an electrode assembly and an electrolyte are sealed inside a thin film sheet pouch formed by bonding a resin layer and a metal layer. The electrode assembly received in the battery case may include a jelly-roll type (winding-type), stack type, or complex type (stack/folding type) structure.

Meanwhile, due to recent trend changes in slim type or various designs, a new type of battery may be applied. In other words, there is a high need for a battery that may be applied according to the design of a device to which the battery is applied.

Accordingly, atypical structures, such as a shape deviating from a general rectangular structure, e.g., a stepped or indented structure derived from different sizes of electrode parts on a plane or a geometric structure derived from different shapes of parts of the electrode assembly, may be considered. Secondary batteries having such atypical structures may be applied to electronic devices of various designs.

[Detailed Description of the Invention]

[Technical Problem]

As a portion (e.g., a curved portion) of a battery having an atypical structure may require a relatively large heat-fusion sealing area, use of space of the electronic device may be reduced as much as the unnecessarily occupied sealing area.

If an additional sealing portion is secured by forming a space recessed inward of the electrode assembly from the curved portion to enhance the sealing reliability in the portion (e.g., curved portion) of the battery having the atypical structure, the capacity of the battery may be reduced.

According to various embodiments of the disclosure, there may be provided a battery with sealing reliability enhanced without a reduction in the capacity of the battery.

The disclosure is not limited to the foregoing embodiments but various modifications or changes may rather be made thereto without departing from the spirit and scope of the disclosure.

[Technical Solution]

According to various embodiments of the disclosure, an electronic device may comprise a housing including a plate, a base member disposed in the housing and disposed substantially parallel to the plate, and a battery disposed in an area of the base member and configured to supply power to the electronic device. The battery may include an electrode assembly including a first portion and a second portion having different sizes and a battery case including a receiving space configured to receive the electrode assembly and a sealing portion disposed along an outer periphery of the electrode assembly. A crossing portion of the first portion and the second portion may form a first curved structure. At least a portion of the sealing portion adjacent to the first curved structure may include a first elongated structure formed based on the first curved structure.

According to various embodiments, a battery may comprise an electrode assembly including a first portion and a second portion having different sizes and a battery case including a receiving space configured to receive the electrode assembly and a sealing portion disposed along an outer periphery of the electrode assembly. A crossing portion of the first portion and the second portion of the electrode assembly may form a first curved structure. At least a portion of the sealing portion adjacent to the first curved structure may include a first elongated structure formed based on the first curved structure.

[Advantageous Effects]

According to various embodiments of the disclosure, the battery may include an elongated structure positioned on the outer periphery of the battery case corresponding to the curved portion of the battery having an atypical structure. It is possible to enhance sealing reliability without reducing battery capacity by the elongated structure of the battery case.

[Brief Description of the Drawings]

FIG. 1 is a block diagram illustrating an electronic device in a network environment according to various embodiments of the disclosure;
FIG. 2A is a front perspective view illustrating an electronic device 101 according to various embodiments of the disclosure;

FIG. 2B is a rear perspective view illustrating an electronic device 101 according to various embodiments of the disclosure;

FIG. 3 is a perspective view illustrating an electronic device according to various embodiments of the disclosure;

FIG. 4A is a schematic view illustrating an example of a battery having an atypical structure according to various embodiments of the disclosure;

FIG. 4B is a cross-sectional view illustrating a side of the battery of FIG. 4A, taken along direction A-A' according to various embodiments of the disclosure;

FIG. 4C is a cross-sectional view illustrating a side of the battery of FIG. 4A, taken along direction B-B' according to various embodiments of the disclosure;

FIG. 5 is a view illustrating a process in which a portion where different outer peripheries of a battery case cross each other is elongated by a forming jig according to various embodiments of the disclosure;

FIG. 6 is a view illustrating examples of various shapes of a forming jig according to various embodiments of the disclosure;

FIG. 7A is a view illustrating a battery case including an elongated portion according to various embodiments of the disclosure;

FIG. 7B is a view illustrating a side surface of the battery of FIG. 7A according to various embodiments of the disclosure;

FIG. 8 is a schematic view illustrating an example of a battery according to various embodiments of the disclosure;

FIG. 9 is a schematic view illustrating an example of a battery according to another embodiment of the disclosure; and

FIG. 10 is a schematic view illustrating an example of a battery according to another embodiment of the disclosure.

[Mode for Carrying out the Invention]

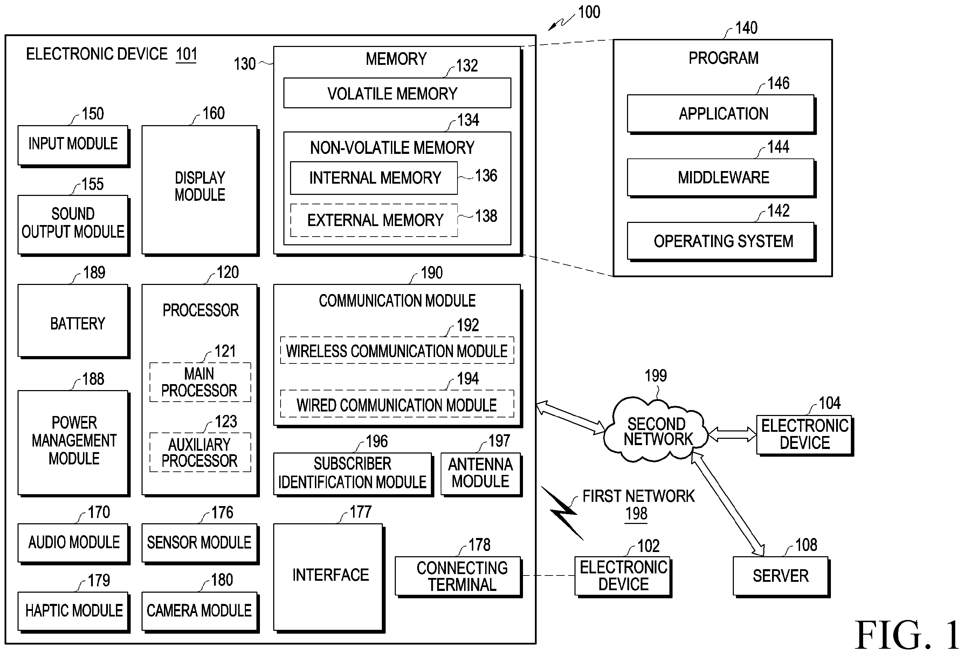

FIG. 1 is a block diagram illustrating an electronic device in a network environment according to various embodiments of the disclosure;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery or a battery pack including a plurality of batteries (hereinafter, referred to as battery) 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN))). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

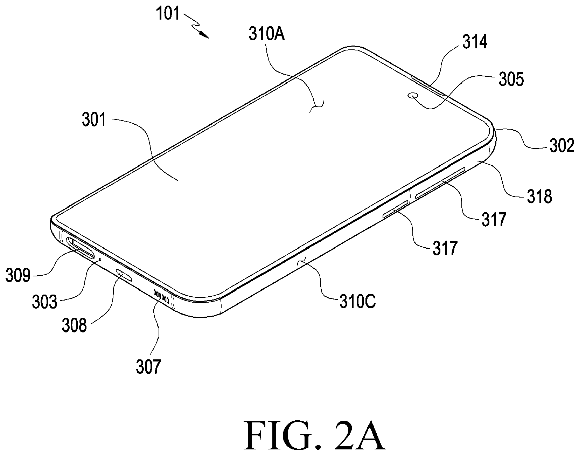

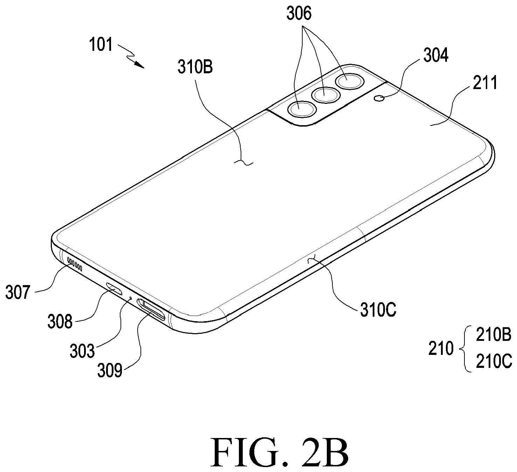

FIG. 2A is a front perspective view illustrating an electronic device 101 according to various embodiments of the disclosure. FIG. 2B is a rear perspective view illustrating an electronic device 101 according to various embodiments of the disclosure.

Referring to FIGS. 2A and 2B, according to an embodiment, an electronic device 101 may include a housing 310 with a front surface 310A, a rear surface 310B, and a side surface 310C surrounding a space between the front surface 310A and the rear surface 310B. According to another embodiment (not shown), the housing 310 may denote a structure forming part of the front surface 310A of FIG. 2A, the rear surface 3210B of FIG. 2B, and the side surface 310C. According to an embodiment, at least part of the front surface 310A may have a substantially transparent front plate 302 (e.g., a glass plate or polymer plate including various coat layers). The rear surface 310B may be formed by a rear plate 311. The rear plate 311 may be formed of, e.g., glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel plate 318 may be integrally formed together and include the same material (e.g., glass, metal, such as aluminum, or ceramic). According to another embodiment, the front surface 310A and/or the front plate 302 may include a part of the display 301.

According to an embodiment, the electronic device 101 may include at least one of a display 301, audio modules 303, 307, and 314 (e.g., the audio module 170 of FIG. 1), a sensor module (e.g., the sensor module of FIG. 1). 176), camera modules 305 and 306 (e.g., the camera module 180 of FIG. 1), a key input device 217 (e.g., the input module 150 of FIG. 1), and connector holes 308 and 309 (e.g., the connection terminal 178 of FIG. 1). According to an embodiment, the electronic device 101 may exclude at least one (e.g., the connector hole 309) of the components or may add other components. According to an embodiment, the display 301 may be visually revealed through, e.g., a majority portion of the front plate 302.

According to an embodiment, the surface (or the front plate 302) of the housing 310 may include a screen display area formed as the display 301 is visually exposed. For example, the screen display area may include the front surface 310A.

According to another embodiment (not shown), the electronic device 101 may include a recess or opening formed in a portion of the screen display area (e.g., the front surface 310A) of the display 301 and may include at least one or more of an audio module 314, a sensor module (not shown), a light emitting device (not shown), and a camera module 305 aligned with the recess or opening. According to another embodiment (not shown), at least one or more of the audio module 314, sensor module (not shown), camera module 305, fingerprint sensor (not shown), and light emitting device (not shown) may be included on the rear surface of the screen display area of the display 301.

According to another embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen.

According to an embodiment, at least a portion of the key input device 317 may be disposed on the side bezel structure 318.

According to an embodiment, the audio modules 303, 307, and 314 may include, e.g., a microphone hole 303 and speaker holes 307 and 314. The microphone hole 303 may have a microphone inside to obtain external sounds. According to an embodiment, there may be a plurality of microphones to be able to detect the direction of a sound. The speaker holes 307 and 314 may include an external speaker hole 307 and a phone receiver hole 314. According to an embodiment, the speaker holes 307 and 314 and the microphone hole 303 may be implemented as a single hole, or speakers may be rested without the speaker holes 307 and 314 (e.g., piezo speakers).

According to an embodiment, the sensor modules (not shown) may generate an electrical signal or data value corresponding to an internal operating state or external environmental state of the electronic device 101. The sensor module (not shown) may include, e.g., a first sensor module (not shown) (e.g., a proximity sensor) and/or a second sensor module (not shown) (e.g.,

a fingerprint sensor) disposed on the front surface 310A of the housing 310. The sensor module (not shown) may include a third sensor module (not shown) (e.g., an HRM sensor) and/or a fourth sensor module (not shown) (e.g., a fingerprint sensor) disposed on the rear surface 310B of the housing 310). According to another embodiment (not shown), the fingerprint sensor may be disposed on the rear surface 310B as well as on the front surface 310A (e.g., the display 301) of the housing 310. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 305 and 306 may include a front camera module 305 disposed on the first surface 310A of the electronic device 101 and a rear camera module 306 and/or a flash 304 disposed on the rear surface 310B. The camera modules 305 and 306 may include one or more lenses, an image sensor, and/or an image signal processor. The flash 204 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 101.

According to an embodiment, the key input device 317 may be disposed on the side surface 310C of the housing 310. According to another embodiment, the electronic device 101 may exclude all or some of the above-mentioned key input devices 317 and the excluded key input devices 317 may be implemented in other forms, e.g., as soft keys, on the display 301.

According to an embodiment, the light emitting device may be disposed on, e.g., the front surface 310A of the housing 310. The light emitting device (not shown) may provide, e.g., information about the state of the electronic device 101 in the form of light. According to another embodiment, the light emitting device (not shown) may provide a light source that interacts with, e.g., the front camera module 305. The light emitting device (not shown) may include, e.g., a light emitting diode (LED), an infrared (IR) LED, and/or a xenon lamp.

According to an embodiment, the connector holes 308 and 309 may include a first connector hole 308 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 309 for receiving a storage device (e.g., a subscriber identification module (SIM) card). According to an embodiment, the first connector hole 308 and/or the second connector hole 309 may be omitted.

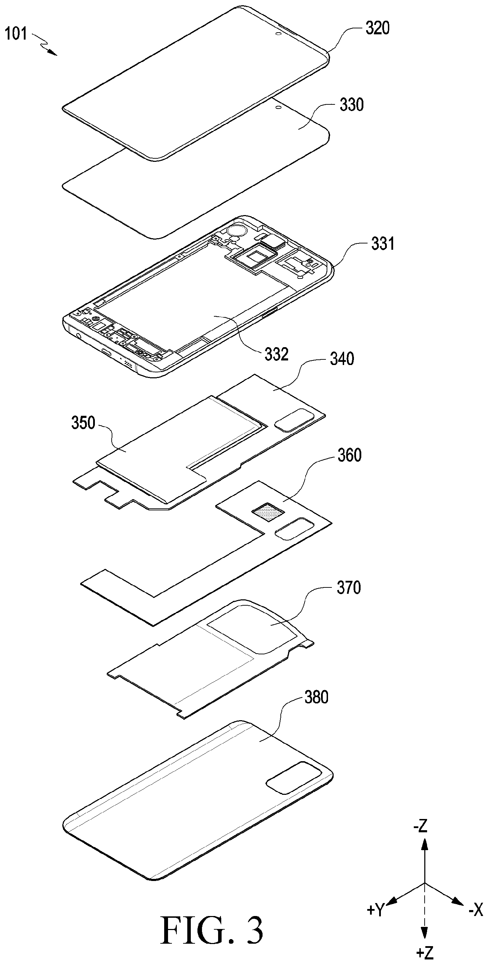

FIG. 3 is a perspective view illustrating an electronic device according to various embodiments of the disclosure;

Referring to FIG. 3, an electronic device 101 (e.g., the electronic device 101 of FIGS. 2A and 2B) may include at least one of a front plate 320 (e.g., the front plate 302 of FIG. 2A), a display 330 (e.g., the display 301 of FIG. 2A), a first supporting member 332 (e.g., a bracket), a printed circuit board 340, a battery 350, a second supporting member 360 (e.g., a rear case), an antenna 370, and a rear plate 380 (e.g., the rear plate 311 of FIG. 2B). According to an embodiment, the electronic device 101 may exclude at least one (e.g., the first supporting member 332 or the second supporting member 360) of the components or may add other components. At least one of the components of the electronic device 101 may be the same or similar to at least one of the components of the electronic device 101 of FIG. 2A or 2B and no duplicate description is made below.

According to an embodiment, the first supporting member 332 may be disposed inside the electronic device 101 to be connected with the side bezel structure 331 or integrated with the side bezel structure 331. The first supporting member 332 may be formed of, e.g., a metallic material and/or non-metallic material (e.g., polymer). The display 330 may be joined onto one surface of the first supporting member 332, and the printed circuit board 240 may be joined onto the opposite surface of the first supporting member 311. A processor, memory, and/or interface may be mounted on the printed circuit board 340. The processor may include one or more of, e.g., a central processing unit, an application processor, a graphic processing device, an image signal processing, a sensor hub processor, or a communication processor. According to an embodiment, the memory may include, e.g., a volatile or non-volatile memory. According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector. According to an embodiment, the battery 350 (e.g., the battery 189 of FIG. 1) may be a device for supplying power to at least one component (e.g., the camera module 312) of the electronic device 101. The battery 189 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 101. According to an embodiment, the first supporting member 332 may be interpreted as a base member.

According to various embodiments, the second supporting member 360 (e.g., a rear case) may be disposed between the printed circuit board 340 and the antenna 370. For example, the second supporting member 360 may include one surface to which at least one of the printed circuit board 340 and the battery 350 is coupled, and another surface to which the antenna 370 is coupled.

According to an embodiment, the antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. For example, the antenna 370 may include a coil for wireless charging. According to an embodiment of the present invention, an antenna structure may be formed by a portion or combination of the side bezel structure 331 and/or the first supporting member 232.

According to various embodiments, the electronic device 101 may include a camera module (e.g., the camera module 306 of FIG. 2B) disposed in the housing (e.g., the housing 310 of FIG. 2A). According to an embodiment, the camera module 306 may be disposed on the first supporting member 332 and may be a rear camera module (e.g., the camera module 312 of FIG. 2B) capable of obtaining an image of a subject positioned behind (e.g., the +Z direction) of the electronic device 101. According to an embodiment, at least a portion of the camera module 312 may be exposed to the outside of the electronic device 101 through the opening 382 formed in the rear plate 380.

The electronic device 101 disclosed in FIGS. 2A to 3 has a bar-type or plate-type appearance but the disclosure is not limited thereto. For example, the illustrated electronic device may be a rollable electronic device or a foldable electronic device. "Rollable electronic device" may mean an electronic device at least a portion of which may be wound or rolled or received in a housing (e.g., the housing 310 of FIG. 2A) as the display (e.g., the display 330 of FIG. 3) may be bent and deformed. As the display is stretched out or is exposed to the outside in a larger area according to the user's need, the rollable electronic device may use an expanded second display area. "Foldable electronic device" may mean an electronic device that may be folded in directions to face two different areas of the display or in directions opposite to each other. In general, in the portable state, the foldable electronic device may be folded so that the two different areas of the display face each other and, in an actual use state, the user may unfold the display so that the two different areas form a substantially flat shape. In some embodiments, according to various embodiments of the disclosure, the electronic device 101 may include various electronic devices, such as a laptop computer or a camera, as well as a portable electronic device, such as a smart phone.

In general, to receive the electrode assembly in a pouch-type battery case, a forming process of applying pressure to a flat aluminum battery case in the shape of the electrode assembly to form a three-dimensional structure is required. The disclosure applies such a process to implement a sealable length by pressing a curved portion of a battery case requiring elongation when forming the battery case into a specific shape.

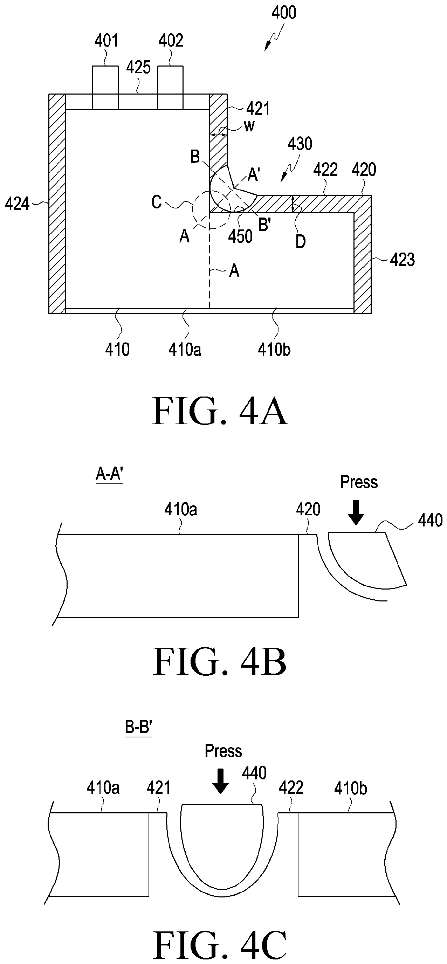

FIG. 4A is a schematic view illustrating an example of a battery having an atypical structure according to various embodiments of the disclosure. FIG. 4B is a cross-sectional view illustrating a side of the battery of FIG. 4A, taken along direction A-A' according to various embodiments of the disclosure. FIG. 4C is a cross-sectional view illustrating a side of the battery of FIG. 4A, taken along direction B-B' according to various embodiments of the disclosure.

Referring to FIGS. 4A to 4C, a battery 400 (e.g., the battery 189 of FIG. 1 and/or the battery 350 of FIG. 3) may include an electrode assembly 410, electrode leads 401 and 402 welded to electrode tabs (not shown) extending from the electrode assembly 410, and a battery case 420 receiving the electrode assembly 410.

According to various embodiments, the electrode assembly 410 is a power generation device in which a positive electrode and a negative electrode are sequentially stacked with a separator interposed therebetween and may have a stack type or a stack/folding type structure. The electrode tabs (not shown) may extend from the electrode plates, respectively, of the electrode assembly 410. The electrode leads 401 and 402 may be electrically connected with the plurality of electrode tabs extending from the electrode plates, respectively, by, e.g., welding, and may be partially exposed to the outside of the battery case 420. According to an embodiment, an insulation film (not shown) may be attached to portions of the upper and lower surfaces of the electrode leads 401 and 402 to increase the sealability with the battery case 420 and secure electrical insulation.

According to an embodiment, the battery case 420 may include an aluminum laminate sheet, provide a space for receiving the electrode assembly 410, and overall have a pouch shape.

Referring to FIGS. 4A to 4C, the battery 400 may have a structure in which at least a portion of the outer peripheries 421, 422, 423, 424, and 425 of the battery case 420 having the electrode assembly 410 embedded is heat fusion-sealed.

According to various embodiments, the electrode assembly 410 has a flat shape, and two portions 410a and 410b of the electrode assembly 410 having different sizes are divided by the boundary A, forming a step 430 in the electrode assembly 410, which originates from the difference in size between the portions 410a and 410b of the electrode assembly 410. According to an embodiment, since the battery case 420 has a shape corresponding to the electrode assembly 410, and the outer peripheries 421, 422, 423, 424, and 425 of the battery case 420 are sealed along the ends of the electrode assembly 410, the battery 400 may have an atypical structure including the step 430, rather than a rectangular structure, corresponding to the shape of the electrode assembly 410.

According to various embodiments, in the battery 400, the different outer peripheries 421 and 422 of the battery case 720 cross each other for the battery case 420 to correspond to such a shape in the curved portion C where the outer peripheries of the portions 410a and 410b of the electrode assembly 410 cross each other, and an elongated portion 450 may be included which is elongated by pressing by the forming jig 440 in the crossing portion of the different outer peripheries 421 and 422 of the battery case 420. According to an embodiment, the elongated length of the elongated portion 450 may be determined depending on at least one of the curvature of the curved portion C of the battery 400 or the width W of the different crossing outer peripheries 421 and 422 of the battery case 420. According to an embodiment, the forming jig 440 may have various structures as described below, depending on the length and/or shape necessary for the elongated portion 450. According to an embodiment, the elongated portion 450 may be sealed considering at least one of the curvature of the curved portion C of the battery 400, the thickness of the battery case 420, or the width W of the different crossing outer peripheries 421 and 422 of the battery case 420.

According to the structure of the battery 400 of FIGS. 4A to 4C, additional elongation may be performed on the portion where the different outer peripheries 421 and 422 of the battery case 420 forming the curved portion C cross each other, heat-fusion sealing the portion where the outer peripheries 421 and 422 are connected, without cutting. According to an embodiment, as the outer peripheries 421 and 422 of the battery case 420 are heat-fusion sealed through elongation in the crossing portion of the different outer peripheries 421 and 422 of the battery case 420, the need for forming a space recessed inward of the electrode assembly 410 to secure an additional sealing area is eliminated, maintaining and/or increasing the battery capacity.

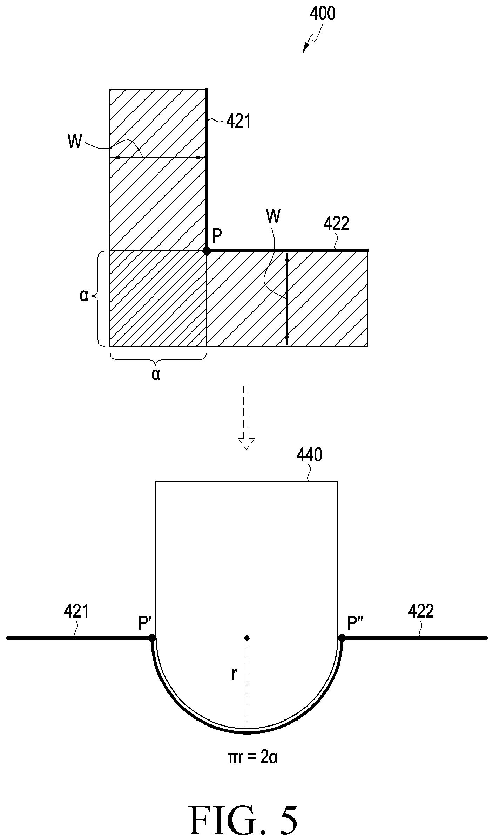

FIG. 5 is a view illustrating a process in which a portion where different outer peripheries of a battery case cross each other is elongated by a forming jig according to various embodiments of the disclosure.

Referring to FIG. 5, the outer peripheries 421 and 422 of the battery case 420 of the battery 400 (e.g., the battery 400 of FIGS. 4A to 4C) vertically cross at the crossing point, and each may have length a of sealing width W. When the outer periphery 422 of the battery case 420 is pressed toward the crossing point P at 45 degrees by a hemispherical forming jig 440, the crossing point P may be elongated along the outer shape of the hemispherical forming jig. The length of the curve P'P" formed as the crossing point P is elongated may be referred to as an elongated length and may have a length corresponding to the circumference of the semi-circle which is a cross section of the hemispherical forming jig.

According to various embodiments, when elongation is performed, for sealing, on the crossing portion of the outer peripheries 421 and 422 of the battery case 420 connected corresponding to the curved portion, the minimum elongated length necessary may correspond to twice the sealing width W of the outer peripheries 421 and 422 of the battery case 420. In the embodiment of FIG. 5, when the length of the sealing width W of the outer peripheries 421 and 422 of the battery case 420 is a, and the length of the curve P'P" corresponding to the elongated length is πr which corresponds to the circumference of the semi-circle which is a cross section of the hemispherical forming jig whose radius is r, Equation 1 below may be met.

[Equation 1]

$$\pi \geq 2a$$

In the embodiment of FIG. 5, when elongation is performed by pressing the crossing portion of the outer peripheries 421 and 422 of the battery case 420 connected corresponding to the curved portion by the hemispherical forming jig, the minimum value of radius r of the hemispherical forming jig may be 2a/π.

Although the relationship between the elongated length and the sealing width is described by taking a hemispherical forming jig as an example in the embodiment of FIG. 5, the disclosure is not limited thereto, and various shapes of forming jigs may be applied to various embodiments of the disclosure as described below. However, even in such a case, the shape of the forming jig should be determined depending on the necessary length and/or shape of the elongated portion.

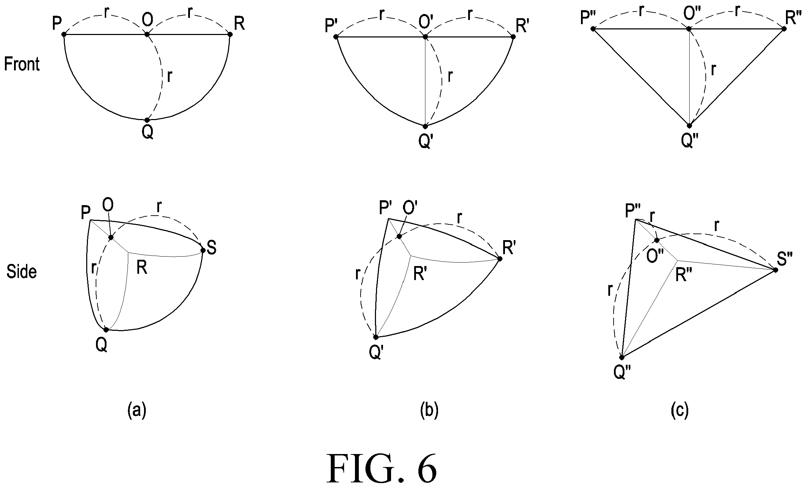

FIG. 6 is a view illustrating examples of various shapes of a forming jig according to various embodiments of the disclosure.

Referring to (a) of FIG. 6, when the center of straight line PR is O, and the center of curve PR is Q, the forming jig at front view may have a shape of semi-circle PQR in which straight line PO, straight line OQ, and straight line OR all have the same length r, and the curvature k of curve PQ and curve RQ is 1/r. Further, the forming jig at side view may have a hemispherical shape which includes a semi-circle PRS perpendicular to the semi sphere PQR of the forming jig positioned on the YZ plane, positioned on the XY plane, and having a radius r (where, S is the center of curve PR), and in which the curvature of curve SQ is 1/r.

When elongation is performed through the forming jig according to (a) of FIG. 6, the elongated length corresponds to the length of curve PQR and may be πr. According to an embodiment, when the elongated length may be represented as πr, and the length of the sealing width is a, Equation 1 above may be met.

Referring to (b) of FIG. 6, when the center of straight line P'R' is O', and O'Q' is perpendicular to straight line P'R' and has the same length as straight line P'O', the forming jig at front view may have a shape (hereinafter, referred to as a pseudo semi-circle) in which straight line P'O', straight line O'Q', and straight line O'R' all have the same length r, and the curvature k of curve P'Q' and curve R'Q' is a value between 0 and 1/r. According to an embodiment, the forming jig at side view may have a shape (hereinafter, referred to as a pseudo hemispherical shape) which includes a pseudo semi-circle P'R'S' perpendicular to the pseudo semi-circle P'Q'R' of the forming jig positioned on the YZ plane and positioned on the XY plane (where, S' is perpendicular to O'S' and P'R', and O'S' and P'O' have the same length), and in which the curvature of curve S'Q' is 1/r.

When elongation is performed through the forming jig according to (b) of FIG. 6, the elongated length may have a value corresponding to the sum of the length of curve P'Q' and the length of curve R'Q'. According to an embodiment, the elongated length meets Equation 2 below when the length of the sealing width is a. d1 may be the length of curve P'Q', and d2 may be the length of curve R'Q'.

[Equation 2]

$$\pi r > d1 + d2 \geq 2a$$

Referring to (c) of FIG. 6, when the center of straight line P'R' is O', and O'Q' is perpendicular to straight line P'R' and has the same length as straight line P'O', the forming jig at front view may have a rectangular shape P"Q"R" in which straight line P"O", straight line O"Q", and straight line O"R" all have the same length r, the length of straight line P"R" corresponding to the base is 2r, and the length of straight line O"Q" corresponding to the height is r. According to an embodiment, the forming jig at side view may have a triangular-based pyramid shape which includes a triangle P"R"S" perpendicular to the triangle P"Q"R" of the forming jig positioned on the YZ plane and positioned on the XY plane (where, S" is perpendicular to O"S" and P"R", and O"S" and P"O" have the same length), and in which the curvature k of straight line S"Q" is 0.

When elongation is performed through the forming jig according to (c) of FIG. 6, the elongated length may have a value corresponding to the sum of the length of straight line P"Q" and the length of straight line R"Q". According to an embodiment, when the elongated length may be represented as $2\sqrt{2}r$, and the length of the sealing width is a, Equation 3 below may be met.

[Equation 3]

$$2\sqrt{2} \geq 2a$$

In FIG. 6, the hemispherical shape, the pseudo hemispheric shape, and the triangular-based pyramid shape have been described as shapes of the forming jig. These shapes may include a structure that may be deeply pressed outward of the sealing portion. According to an embodiment, the shape of the forming jig of the disclosure is not limited to the shapes illustrated in FIG. 6 but may have various shapes that have a structure that may be deeply pressed outward of the sealing portion and meet the above-described shape conditions of the forming jig.

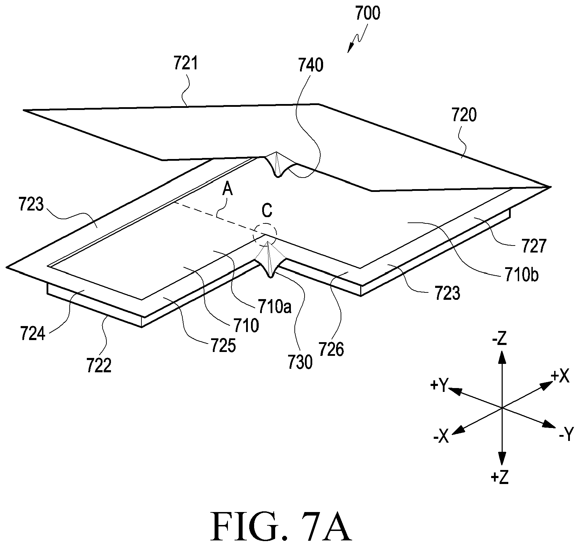

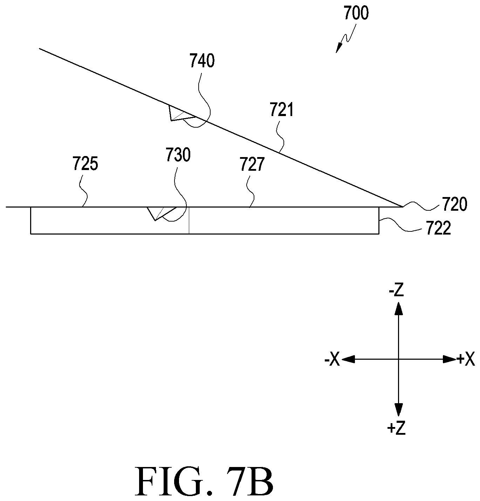

FIG. 7A is a view illustrating a battery case including an elongated portion according to various embodiments of the disclosure. FIG. 7B is a view illustrating a side surface of the battery of FIG. 7A according to various embodiments of the disclosure.

Referring to FIGS. 7A and 7B, a battery 700 (e.g., the battery 189 of FIG. 1 and/or the battery 350 of FIG. 3) may include an electrode assembly 710, electrode leads (not shown) welded to electrode tabs (not shown) extending from the electrode assembly 710, and a battery case 720 including a mounting space for receiving the electrode assembly 710.

According to various embodiments, the electrode assembly 710 has a flat shape, and two portions 710a and 710b of the electrode assembly 710 having different sizes are divided by the boundary A, forming a step in the electrode assembly 710, which originates from the difference in size between the portions 710a and 710b of the electrode assembly 710. According to an embodiment, the battery case 720 may include an upper case 721 and a lower case 722. The lower case 722 of the battery case 720 may be formed by forming a flat aluminum plate having the same shape as the upper case 721 into the shape corresponding to the electrode assembly 710, and the electrode assembly 710 may be received in the internal space formed in the forming process. According to an embodiment, the lower case 722 of the battery case 720 may include outer peripheries 723, 724, 725, 726, and 727 that are coupled with the upper case 721 and sealed.

According to various embodiments, in the battery 700, the different outer peripheries 725 and 726 of the lower case 720 cross each other for the lower case 722 of the battery case 720 to correspond to such a shape in the curved portion C where the outer peripheries of the portions 710a and 710b of the electrode assembly 710 cross each other, and a first elongated portion 730 may be included which is elongated by pressing by the forming jig (not shown) in the crossing portion of the different outer peripheries 725 and 726 of the lower case 720. The elongated length of the first elongated portion 730 may be determined depending on the curvature of the curved portion C of the battery 700 and the sealing width of the different crossing outer peripheries 725 and 726 of the lower case 722. According to an embodiment, the upper case 721 of the battery case 720 may include a second elongated portion 740 which is elongated by pressing by the same forming jig in the portion corresponding to the crossing portion of the different outer peripheries 725 and 726 of the lower case 722. According to an embodiment, when the upper case 721 of the battery case 720 is folded toward the lower case 722, the second elongated portion 740 of the upper case 721 may overlap the first elongated portion 730 of the lower case 722. A double-sided forming process may be performed on the upper case 721 and lower case 722 of the battery case 720 using the forming jig having the same shape.

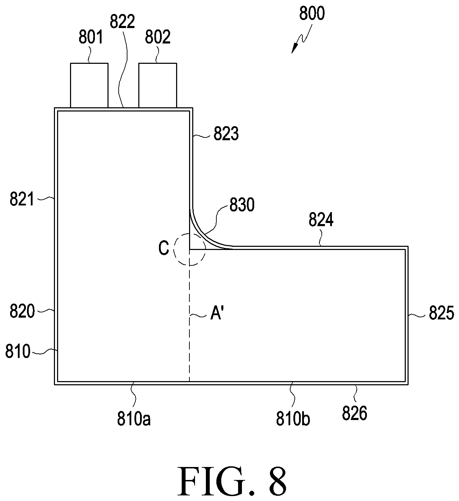

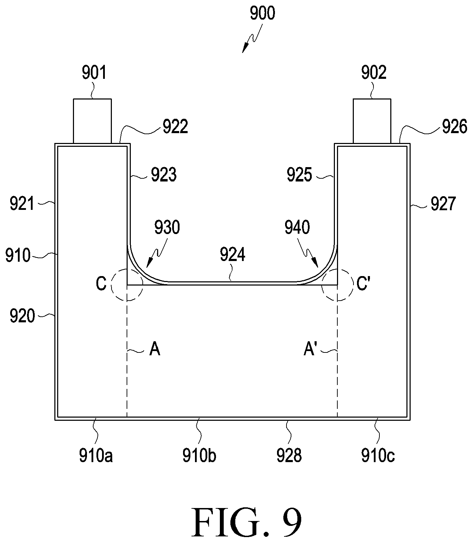

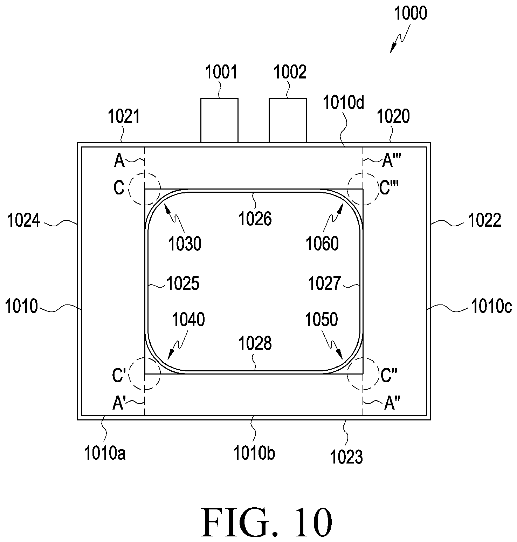

FIG. 8 is a schematic view illustrating an example of a battery according to various embodiments of the disclosure. FIG. 9 is a schematic view illustrating an example of a battery according to another embodiment of the disclosure. FIG. 10 is a schematic view illustrating an example of a battery according to another embodiment of the disclosure.

Referring to FIG. 8, a battery 800 (e.g., the battery 189 of FIG. 1 and/or the battery 350 of FIG. 3) may include an electrode assembly 810, electrode leads 801 and 802 welded to electrode tabs (not shown) extending from the electrode assembly 810, and a battery case 820 receiving the electrode assembly 810.

According to various embodiments, the electrode assembly 810 has a flat shape, and two portions 810a and 810b of the electrode assembly 810 having different sizes are divided by the boundary A', forming a step in the electrode assembly 810, which originates from the difference in size between the portions 810a and 810b of the electrode assembly 810. According to an embodiment, one curved portion C may be formed in a portion where the outer peripheries of the portions 810a and 810b of the electrode assembly 810 cross each other.

According to an embodiment, the battery case 820 has a shape corresponding to the electrode assembly 810. The outer peripheries 821, 822, 823, 824, 825, and 826 of the battery case 820 are sealed along ends of the electrode assembly 810. According to an embodiment, the different outer peripheries 823 and 824 of the battery case 820 cross each other for the battery case 820 to correspond to such a shape in the curved portion C where the outer peripheries of the portions 810a and 810b of the electrode assembly 810 cross each other, and an elongated portion 830 elongated through a forming process and heat-fusion sealed may be included in the portion where the different outer peripheries 823 and 824 of the battery case 820 cross each other.

Referring to FIG. 9, a battery 900 (e.g., the battery 189 of FIG. 1 and/or the battery 350 of FIG. 3) may include an electrode assembly 910, electrode leads 901 and 902 welded to electrode tabs (not shown) extending from the electrode assembly 910, and a battery case 920 receiving the electrode assembly 910.

According to various embodiments, the electrode assembly 910 has a flat shape, and three different portions 910a, 910b, and 910c having different sizes are divided by the boundary A and boundary A', forming a first step originating from a difference in size between the portions 910a and 910b of the electrode assembly 910 and a second step originating from a difference in size between the portions 910b and 910c of the electrode assembly 910, in the electrode assembly 910. According to an embodiment, a first curved portion C may be formed in the portion where the outer peripheries of the portions 910a and 910b of the electrode assembly 910 cross each other, and a second curved portion C' may be formed in the portion where the outer peripheries of the portions 910b and 910c of the electrode assembly 910 cross each other.

According to various embodiments, the battery case 920 has a shape corresponding to the electrode assembly 910. The outer peripheries 921, 922, 923, 924, 925, 926, 927, and 928 of the battery case 920 may be sealed along ends of the electrode assembly 910. According to an embodiment, the different outer peripheries 923 and 924 of the battery case 920 cross each other for the battery case 920 to correspond to such a shape in the first curved portion C where the outer peripheries of the portions 910a and 910b of the electrode assembly 910 cross each other, and a first elongated portion 930 elongated through a forming process and heat-fusion sealed may be included in the portion where the different outer peripheries 923 and 924 of the battery case 920 cross each other. According to an embodiment, the different outer peripheries 924 and 925 of the battery case 920 cross each other for the battery case 920 to correspond to such a shape in the second curved portion C' where the outer peripheries of portions 910b and 910c of the electrode assembly 910 cross each other, and a second elongated portion 940 elongated through a forming process and heat-fusion sealed may be included in the portion where the different outer peripheries 924 and 925 of the battery case 920 cross each other.

Referring to FIG. 10, a battery 1000 (e.g., the battery 189 of FIG. 1 and/or the battery 350 of FIG. 3) may include an electrode assembly 1010, electrode leads 1001 and 1002 welded to electrode tabs (not shown) extending from the electrode assembly 1010, and a battery case 1020 receiving the electrode assembly 1010.

According to various embodiments, the electrode assembly 1010 has a flat shape, and four different portions 1010a, 1010b, 1010c, and 1010d of the electrode assembly 1010 may be divided by the boundary A, boundary A', boundary A", and boundary A'", forming a first step originating a difference in size between the portions 1010d and 1010a of the electrode assembly 1010, a second step originating from a difference in size between the portions 1010a and 1010b of the electrode assembly 1010, a third step originating from a difference in size between the portions 1010b and 1010c of the electrode assembly 1010, and a fourth step originating from a difference in size between the portions 1010c and 1010d of the electrode assembly 1010, in the electrode assembly 1010. According to an embodiment, a first curved portion C may be formed in the portion where the outer peripheries of the portions 1010d and 1010a of the electrode assembly 1010 cross each other, a second curved portion C' may be formed in the portion where the outer peripheries of the portions 1010a and 1010b of the electrode assembly 1010 cross each other, a third curved portion C" may be formed in the portion where the outer peripheries of the portions 1010b and 1010c of the electrode assembly 1010 cross each other, and a fourth curved portion C'" may be formed in the portion where the outer peripheries of the portions 1010c and 1010d of the electrode assembly 1010 cross each other.

According to various embodiments, the battery case 1020 has a shape corresponding to the electrode assembly 1010. The outer peripheries 1021, 1022, 1023, 1024, 1025, 1026, 1027, and 1028 of the battery case 1020 may be sealed along ends of the electrode assembly 1010. According to an embodiment, the different outer peripheries 1026 and 1025 of the battery case 1020 may cross each other for the battery case 1020 to correspond to such a shape in the first curved portion C where the outer peripheries of the portions 1010d and 1010a of the electrode assembly 1010 cross each other, and a first elongated portion 1030 elongated through a forming process and heat-fusion sealed may be included in the portion where the different outer peripheries 1026 and 1025 of the battery case 1020 cross each other. According to an embodiment, the different outer peripheries 1025 and 1028 of the battery case 1020 cross each other for the battery case 1020 to correspond to such a shape in the second curved portion C' where the outer peripheries of the portions 1010a and 1010b of the electrode assembly 1010 cross each other, and a second elongated portion 1040 elongated through a forming process and heat-fusion sealed may be included in the portion where the different outer peripheries 1025 and 1028 of the battery case 1020 cross each other. According to an embodiment, the different outer peripheries 1028 and 1027 of the battery case 1020 may cross each other for the battery case 1020 to correspond to such a shape in the third curved portion C" where the outer peripheries of the portions 1010b and 1010c of the electrode assembly 1010 cross each other, and a third elongated portion 1050 elongated through a forming process and heat-fusion sealed may be included in the portion where the different outer peripheries 1028 and 1027 of the battery case 1020 cross each other. According to an embodiment, the different outer peripheries 1027 and 1026 of the battery case 1020 may cross each other for the battery case 1020 to correspond to such a shape in the fourth curved portion C'" where the outer peripheries of the portions 1010c and 1010d of the electrode assembly 1010 cross each other, and a fourth elongated portion 1060 elongated through a forming process and heat-fusion sealed may be included in the portion where the different outer peripheries 1027 and 1026 of the battery case 1020 cross each other.

According to various embodiments of the disclosure, an electronic device (e.g., 101 of FIGS. 1 to 3) may comprise a housing including a plate, a base member disposed in the housing and disposed substantially parallel to the plate, and a battery (e.g., 400 of FIG. 4A, 700 of FIG. 7A, 800 of FIG. 8, 900 of FIG. 9, or 1000 of FIG. 10) disposed in an area of the base member and configured to supply power to the electronic device. The battery may include an electrode assembly (e.g., 410 of FIG. 4A, 710 of FIG. 7A, 810 of FIG. 8, 910 of FIG. 9, or 1010 of FIG. 10) including a first portion (e.g., 410a of FIG. 4A, 710a of FIG. 7A, 810a of FIG. 8, 910a of FIG. 9, or 1010a of FIG. 10) and a second portion (e.g., 410b of FIG. 4A, 710b of FIG. 7A, 810b of FIG. 8, 910b of FIG. 9, or 1010b of FIG. 10) having different sizes and a battery case (e.g., 420 of FIG. 4A, 720 of FIG. 7A, 820 of FIG. 8, 920 of FIG. 9, or 1020 of FIG. 10) including a receiving space configured to receive the electrode assembly and a sealing portion disposed along an outer periphery of the electrode assembly. A crossing portion of the first portion and the second portion may form a first curved structure. At least a portion of the sealing portion adjacent to the first curved structure may include a first elongated structure (e.g., 450 of FIG. 4A, 830 of FIG. 8, 930 of FIG. 9, or 1030 of FIG. 10) formed based on the first curved structure.

According to various embodiments, the first elongated structure may be formed based on at least one of a curvature of the first curved structure or a width of the sealing portion.

According to various embodiments, an elongated length of the first elongated structure may be twice, or more than, the width of the sealing portion.

According to various embodiments, the first elongated structure may be formed by pressing the at least the portion of the sealing portion by a forming jig having a specific shape.

According to various embodiments, the first elongated structure may include a first elongated portion (e.g., 740 of FIG. 7A) formed in an upper case (e.g., 721 of FIG. 7A) of the battery case and a second elongated portion (e.g., 730 of FIG. 7A) formed in a lower case (e.g., 722 of FIG. 7A) of the battery case. The first elongated portion and the second elongated portion may overlap each other.

According to various embodiments, the at least the portion of the sealing portion including the first elongated structure may be sealed considering at least one of a thickness of the battery case, a width of the sealing portion, or a curvature of the first curved structure.

According to various embodiments, the second portion of the electrode assembly may have a small size relative to the first portion and be formed to extend from a boundary of the first portion.

According to various embodiments, the first curved structure may be formed in a portion where the boundary of the first portion and the second portion are perpendicular to each other.

According to various embodiments, when a radius of curvature of the first elongated structure is r at plan view, the first elongated structure may include at least one of a semi-circular structure (e.g., (a) of FIG. 6) with a curvature of 1/r, a structure (e.g., (b) of FIG. 6) in which a plurality of curves having a curvature larger than 0 and smaller than 1/r are connected, or a structure (e.g., (c) of FIG. 6) in which a plurality of straight lines having a curvature of 0 are connected.

According to various embodiments, the battery case may include an upper case and a lower case. The lower case may include an internal space formed by forming into a shape corresponding to the electrode assembly. The electrode assembly may be received in the internal space.

According to various embodiments, the electrode assembly may further include a third portion (e.g., 910c of FIG. 9 or 1010c of FIG. 10) having a plane shape. A crossing portion of the second portion and the third portion may form a second curved structure. At least a portion of the sealing portion adjacent to the second curved structure may include a second elongated structure (e.g., 940 of FIG. 9 or 1040 of FIG. 10) formed based on the second curved structure.

According to various embodiments, the second elongated structure may be formed based on at least one of a curvature of the second curved structure or a width of the sealing portion.

According to various embodiments, an elongated length of the second elongated structure may be twice, or more than, the width of the sealing portion.

According to various embodiments, the at least the portion of the sealing portion including the second elongated structure may be sealed considering at least one of a thickness of the battery case, a width of the sealing portion, or a curvature of the second curved structure.

According to various embodiments, when a radius of curvature of the second elongated structure is r at plan view, the second elongated structure may include at least one of a semi-circular structure (e.g., (a) of FIG. 6) with a curvature of 1/r, a structure (e.g., (b) of FIG. 6) in which a plurality of curves having a curvature larger than 0 and smaller than 1/r are connected, or a structure (e.g., (c) of FIG. 6) in which a plurality of straight lines having a curvature of 0 are connected.

According to various embodiments, the battery may further include a plurality of electrode leads welded with electrode tabs extending from the electrode assembly.

According to various embodiments, the sealing portion disposed along the outer periphery of the electrode assembly may be heat-fusion sealed.

According to various embodiments, the battery case may have a pouch shape of a thin film sheet configured by bonding a resin layer and a metal layer.

According to various embodiments of the disclosure, a battery (e.g., 400 of FIG. 4A, 700 of FIG. 7A, 800 of FIG. 8, 900 of FIG. 9, or 1000 of FIG. 10) may comprise an electrode assembly (e.g., 410 of FIG. 4A, 710 of FIG. 7A, 810 of FIG. 8, 910 of FIG. 9, or 1010 of FIG. 10) including a first portion (e.g., 410a of FIG. 4A, 710a of FIG. 7A, 810a of FIG. 8, 910a of FIG. 9, or 1010a of FIG. 10) and a second portion (e.g., 410b of FIG. 4A, 710b of FIG. 7A, 810b of FIG. 8, 910b of FIG. 9, or 1010b of FIG. 10) having different sizes and a battery case (e.g., 420 of FIG. 4A, 720 of FIG. 7A, 820 of FIG. 8, 920 of FIG. 9, or 1020 of FIG. 10) including a receiving space configured to receive the electrode assembly and a sealing portion disposed along an outer periphery of the electrode assembly. A crossing portion of the first portion and the second portion may form a first curved structure. At least a portion of the sealing portion adjacent to the first curved structure may include a first elongated structure (e.g., 450 of FIG. 4A, 830 of FIG. 8, 930 of FIG. 9, or 1030 of FIG. 10) formed based on the first curved structure.

According to various embodiments, a battery pack may include one or more batteries.

It is apparent to one of ordinary skill in the art that an electronic device including a battery according to various embodiments of the disclosure as described above are not limited to the above-described embodiments and those shown in the drawings, and various changes, modifications, or alterations may be made thereto without departing from the scope of the disclosure.

**Claims**

1. An electronic device, comprising:

   a housing including a plate;
   a base member disposed in the housing and disposed substantially parallel to the plate; and
   a battery disposed in an area of the base member and configured to supply power to the electronic device, wherein the battery includes:

   an electrode assembly including a first portion and a second portion having different sizes; and
   a battery case including a receiving space configured to receive the electrode assembly and a sealing portion disposed along an outer periphery of the electrode assembly, wherein a crossing portion of the first portion and the second portion forms a first curved structure, and wherein at least a portion of the sealing portion adjacent to the first curved structure includes a first elongated structure formed based on the first curved structure.

2. The electronic device of claim 1, wherein the first elongated structure is formed based on at least one of a curvature of the first curved structure or a width of the sealing portion.

3. The electronic device of claim 2, wherein an elongated length of the first elongated structure is twice, or more than, the width of the sealing portion.

4. The electronic device of claim 1, wherein the first elongated structure is formed by pressing the at least the portion of the sealing portion by a forming jig having a specific shape.

5. The electronic device of claim 1, wherein the first elongated structure includes a first elongated portion formed in an upper case of the battery case and a second elongated portion formed in a lower case of the battery case, and wherein the first elongated portion and the second elongated portion overlap each other.

6. The electronic device of claim 1, wherein the at least the portion of the sealing portion including the first elongated structure is sealed considering at least one of a thickness of the battery case, a width of the sealing portion, or a curvature of the first curved structure.

7. The electronic device of claim 1, wherein the second portion of the electrode assembly has a small size relative to the first portion and is formed to extend from a boundary of the first portion.

8. The electronic device of claim 7, wherein the first curved structure is formed in a portion where the boundary of the first portion and the second portion are perpendicular to each other.

9. The electronic device of claim 1, wherein when a radius of curvature of the first elongated structure is r at plan view, the first elongated structure includes at least one of a semi-circular structure with a curvature of 1/r, a structure in which a plurality of curves having a curvature larger than 0 and smaller than 1/r are connected, or a structure in which a plurality of straight lines having a curvature of 0 are connected.

10. The electronic device of claim 1, wherein the battery case includes an upper case and a lower case, wherein the lower case includes an internal space formed by forming into a shape corresponding to the electrode assembly, and wherein the electrode assembly is received in the internal space.

11. The electronic device of claim 1, wherein the electrode assembly further includes a third portion having a plane shape,

    wherein a crossing portion of the second portion and the third portion forms a second curved structure, and
    wherein at least a portion of the sealing portion adjacent to the second curved structure includes a second elongated structure formed based on the second curved structure.

12. The electronic device of claim 11, wherein the second elongated structure is formed based on at least one of a curvature of the second curved structure or a width of the sealing portion.

13. The electronic device of claim 12, wherein an elongated length of the second elongated structure is twice, or more than, the width of the sealing portion.

14. The electronic device of claim 11, wherein the at least the portion of the sealing portion including the second elongated structure is sealed considering at least one of a thickness of the battery case, a width of the sealing portion, or a curvature of the second curved structure.

15. The electronic device of claim 11, wherein when a radius of curvature of the second elongated structure is r at plan view, the second elongated structure includes at least one of a semi-circular structure with a curvature of $1/r$, a structure in which a plurality of curves having a curvature larger than 0 and smaller than $1/r$ are connected, or a structure in which a plurality of straight lines having a curvature of 0 are connected.

FIG. 1

EP 4 235 916 A1

# FIG. 2A

FIG. 2B

FIG. 3

FIG. 4A

FIG. 4B

FIG. 4C

400

421

W

W    422

P

$\alpha$

$\alpha$

440

421    422

P'    P''

r

$\pi r = 2\alpha$

FIG. 5

FIG. 6

FIG. 7A

700

740

721

725    730    727

720

722

-Z

-X          +X

+Z

FIG. 7B

FIG. 8

FIG. 9

FIG. 10

| INTERNATIONAL SEARCH REPORT | International application No. |
|---|---|
| | **PCT/KR2021/016710** |

**A. CLASSIFICATION OF SUBJECT MATTER**

**H01M 50/116**(2021.01)i; **H01M 10/04**(2006.01)i; **B29C 65/00**(2006.01)i; **B29C 65/78**(2006.01)i; **B29C 55/02**(2006.01)i; B29L 31/00(2006.01)n

According to International Patent Classification (IPC) or to both national classification and IPC

**B. FIELDS SEARCHED**

Minimum documentation searched (classification system followed by classification symbols)

H01M 50/116(2021.01); H01M 10/04(2006.01); H01M 2/02(2006.01); H01Q 1/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 조립체(cell assembly), 비정형(atypical), 연신(elongation), 밀봉(sealing), 만입 (indentation), 원호(arch), 라운딩(rounding)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0023032 A (SAMSUNG ELECTRONICS CO., LTD.) 04 March 2020 (2020-03-04)<br>See paragraphs [0051], [0064]-[0065] and [0068] and figures 3a-3c. | 1-15 |
| Y | KR 10-2019-0043251 A (LG CHEM, LTD.) 26 April 2019 (2019-04-26)<br>See paragraphs [0050]-[0077] and figures 1, 3-5, 7 and 9-12. | 1-15 |
| Y | KR 10-1666381 B1 (LG CHEM, LTD.) 14 October 2016 (2016-10-14)<br>See figures 1-7. | 5 |
| Y | KR 10-2015-0108731 A (LG CHEM, LTD.) 30 September 2015 (2015-09-30)<br>See paragraph [0068] and figure 5. | 11-15 |
| A | KR 10-2017-0062877 A (LG CHEM, LTD.) 08 June 2017 (2017-06-08)<br>See claim 1 and figure 3. | 1-15 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 March 2022** | **02 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

International application No.

**PCT/KR2021/016710**

| Patent document cited in search report | | | Publication date (day/month/year) | Patent family member(s) | | | Publication date (day/month/year) |
|---|---|---|---|---|---|---|---|
| KR | 10-2020-0023032 | A | 04 March 2020 | CN | 112640207 | A | 09 April 2021 |
| | | | | EP | 3614493 | A1 | 26 February 2020 |
| | | | | US | 11011825 | B2 | 18 May 2021 |
| | | | | US | 2020-0067172 | A1 | 27 February 2020 |
| | | | | US | 2021-0273316 | A1 | 02 September 2021 |
| | | | | WO | 2020-040557 | A1 | 27 February 2020 |
| KR | 10-2019-0043251 | A | 26 April 2019 | None | | | |
| KR | 10-1666381 | B1 | 14 October 2016 | CN | 105981196 | A | 28 September 2016 |
| | | | | CN | 105981196 | B | 19 September 2017 |
| | | | | EP | 3091593 | A1 | 09 November 2016 |
| | | | | EP | 3091593 | B1 | 03 April 2019 |
| | | | | JP | 2017-506412 | A | 02 March 2017 |
| | | | | JP | 6445028 | B2 | 26 December 2018 |
| | | | | KR | 10-2015-0096325 | A | 24 August 2015 |
| | | | | PL | 3091593 | T3 | 31 July 2019 |
| | | | | US | 10014497 | B2 | 03 July 2018 |
| | | | | US | 2017-0170437 | A1 | 15 June 2017 |
| | | | | WO | 2015-122667 | A1 | 20 August 2015 |
| KR | 10-2015-0108731 | A | 30 September 2015 | CN | 106104900 | A | 09 November 2016 |
| | | | | CN | 106104900 | B | 25 September 2018 |
| | | | | EP | 3107142 | A1 | 21 December 2016 |
| | | | | EP | 3107142 | B1 | 13 September 2017 |
| | | | | JP | 2017-513183 | A | 25 May 2017 |
| | | | | JP | 6340431 | B2 | 06 June 2018 |
| | | | | KR | 10-1590979 | B1 | 03 February 2016 |
| | | | | US | 10263226 | B2 | 16 April 2019 |
| | | | | US | 2017-0092906 | A1 | 30 March 2017 |
| | | | | WO | 2015-141920 | A1 | 24 September 2015 |
| KR | 10-2017-0062877 | A | 08 June 2017 | CN | 107925118 | A | 17 April 2018 |
| | | | | CN | 107925118 | B | 18 September 2020 |
| | | | | EP | 3340358 | A1 | 27 June 2018 |
| | | | | JP | 2018-526798 | A | 13 September 2018 |
| | | | | JP | 6656715 | B2 | 04 March 2020 |
| | | | | KR | 10-1950464 | B1 | 20 February 2019 |
| | | | | TW | 201721938 | A | 16 June 2017 |
| | | | | TW | I643387 | B | 01 December 2018 |
| | | | | US | 10790478 | B2 | 29 September 2020 |
| | | | | US | 2019-0259979 | A1 | 22 August 2019 |
| | | | | WO | 2017-095002 | A1 | 08 June 2017 |